# EUROPÄISCHE PATENTSCHRIFT

(11) **EP 1 038 293 B1**
(45) Veröffentlichungstag und Bekanntmachung des Hinweises auf die Patenterteilung: **19.12.2001**
(21) Anmeldenummer: 98965097.3
(22) Anmeldetag: 02.12.1998
(51) Int. Cl.: G10L 15/18

(54) **VEFAHREN ZUR SPRACHERKENNUNG UNTER VERWENDUNG VON EINER GRAMMATIK**
METHOD FOR VOICE RECOGNITION USING A GRAMMAR
PROCEDE DE RECONNAISSANCE VOCALE AU MOYEN D'UNE GRAMMAIRE

(30) Priorität: 11.12.1997 DE 19754957
(43) Veröffentlichungstag der Anmeldung: 27.09.2000
(73) Patentinhaber: DaimlerChrysler AG, 70567 Stuttgart (DE)
(72) Erfinder: CLASS, Fritz, D-72587 Zainingen (DE); KILIAN, Ute, D-89081 Ulm (DE)
(86) Internationale Anmeldenummer: DE9803536
(87) Internationale Veröffentlichungsnummer: WO9930314

(56) Entgegenhaltungen:
- DE-C- 19 501 599
- METEER M ET AL: "STATISTICAL LANGUAGE MODELING COMBINING N-GRAM AND CONTEXT-FREE GRAMMERS" SPEECH PROCESSING, MINNEAPOLIS, APR. 27 - 30, 1993, Bd. 2, 27. April 1993, Seiten II-37-40, XP000427719 INSTITUTE OF ELECTRICAL AND ELECTRONICS ENGINEERS
- SEIICHI NAKAGAWA ET AL: "THE SYNTAX-ORIENTED SPEECH UNDERSTANDING SYSTEM - SPOJUS-SYNO -" PROCEEDINGS OF THE EUROPEAN CONFERENCE ON SPEECH COMMUNICATION AND TECHNOLOGY (EUROSPEECH), PARIS, SEPT. 26 - 28, 1989, Bd. 2, Nr. CONF. 1, 1. September 1989, Seiten 224-227, XP000209997 TUBACH J P;MARIANI J J
- KENJI KITA ET AL: "INCORPORATING LR PARSING INTO SPHINX" SPEECH PROCESSING 1, TORONTO, MAY 14 - 17, 1991, Bd. 1, Nr. CONF. 16, 14. Mai 1991, Seiten 269-272, XP000245219 INSTITUTE OF ELECTRICAL AND ELECTRONICS ENGINEERS
- JURAFSKY D ET AL: "USING A STOCHASTIC CONTEXT-FREE GRAMMAR AS A LANGUAGE MODEL FOR SPEECH RECOGNITION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 189-192, XP000657962 INSTITUTE OF ELECTRICAL AND ELECTRONICS ENGINEERS

## Beschreibung

Die Erfindung betrifft ein Verfahren zur Spracherkennung von aus mehreren Wörtern eines gegebenen Wortschatzes zusammengesetzten Wortfolgen.

Bei der Erkennung verbunden gesprochener Sprache, die eine beliebige Kombination aller Wörter zuläßt, steigt die Fehlerrate im Vergleich zur Einzelwort-erkennung erheblich an. Um dem entgegenzuwirken, wird Wissen über zulässige Wortfolgen in sogenannten Sprachmodellen gespeichert und bei der Erkennung zur Reduzierung der Anzahl der Wortfolgen eingesetzt.

Sprachmodelle werden meist als sogenannte N-gram-Modelle definiert, wobei N die Tiefe des Modelles bezeichnet, d.h. N aufeinanderfolgende Wörter innerhalb einer Wortfolge werden bei der aktuellen Bewertung berücksichtigt. Wegen des mit zunehmendem N schnell ansteigenden Aufwands im Erkennungsprozeß werden primär Bigram (N=2) oder Trigram (N=3) Sprachmodelle angewandt.

In der DE 195 01 599 C1 ist neben verschiedenen vorbekannten Verfahren zur Spracherkennung ein Verfahren beschrieben, das die Speicherung von Sätzen mit fester Syntax und beliebiger Länge N in einem Bigram-Sprachmodell erlaubt. Das Verfahren integriert Wissen über die Syntax zulässiger Sätze (Wortfolgen) in das Sprachmodell und wird daher auch als syntaktisches Bigram bezeichnet. Ein wesentliches Element zur Integration der Syntax in das Sprachmodell ist die indizierung von in verschiedenen Satzkonstellationen mehrfach auftretenden Wörtern. Der Spracherkenner ist dadurch mit und ohne integrierte Syntax identisch.

Der nach dem syntaktischen Bigram-Sprachmodell arbeitende Spracherkenner erreicht mit der starken Einschränkung der erlaubten Wortfolgen bei begrenzter Anzahl zulässiger Sätze eine hohe Erkennungsrate, ist jedoch auch nur einsetzbar, wenn syntaktische Einschränkungen zuverlässig angegeben werden können und eingehalten werden, beispielsweise bei kurzen Kommandos, Datums- oder Zeitangaben und dgl. Bei einer großen Anzahl zulässiger Wortfolgen wird eine vollständige Vorgabe der Syntax aber sehr aufwendig und in Situationen, wo auch spontan formulierte Wortfolgen erkannt werden sollen, bei welchen die Einhaltung syntaktischer Einschränkungen nicht gewährleistet ist, ist die Erkennung nach einem streng syntaktischen Sprachmodell nur bedingt geeignet.

In einer Veröffentlichung von Meteer et al.:" Statistical Language Modeling Combining N-Gram and Context-Free Grammars", Speech Processing, Minneapolis, Apr.27-30, 1993, Bd. 2, Seiten II-37-40, XP000427719, IEEE ist eine Kombination linguistischer Erkennungsmodelle mit Phrasengrammatiken und N-Gram Erkennungsmodellen in ein Sprachmodell beschrieben.

Eine Veröffentlichung von Kenji Kita: "Incorporating LR Parsing into Sphinx", ICASSP 91, Speech Processing 1, Toronto, Mai 14-18 1991, Bd.1 Seiten 269-272, XP000245219, IEEE wird ein Spracherkennungsverfahren beschrieben, das mit einer kontextfreien Grammatik beginnt. Kann der Parser mit der kontexfreien Grammatik ein Ergebnis finden, kommt die Bigram-Grammatik nicht zum Einsatz. Liegt kein syntaktisch korrektes Ergebnis vor, wird zur Bigram-Grammatik umgeschaltet.

Der vorliegenden Erfindung liegt daher die Aufgabe zugrunde, ein Verfahren zur Spracherkennung anzugeben, welches gegenüber den bisherigen Verfahren bei guter Erkennungsrate einen erweiterten Einsatzbereich bietet

Die Erfindung ist im Patentanspruch 1 beschrieben. Die Unteransprüche enthalten vorteilhafte Ausgestaltungen und Weiterbildungen der Erfindung.

Die kombinierte Anwendung von zwei verschiedenen Erkennungsverfahren, insbesondere mit verschiedenem Umfang syntaktischer Einschränkung, vorzugsweise von Erkennungsverfahren nach einem Sprachmodell mit eindeutiger Syntax einerseits und einem statistischen N-gram Sprachmodell andererseits führt überraschenderweise zu einem erheblich vergrößerten Einsatzbereich, wobei sich verschiedene Kombinationsmöglichkeiten ergeben. Wesentlich an der Kombination ist, daß aufeinanderfolgende Wortfolgenabschnitte einer zusammenhängenden Wortfolge nach verschiedenen Erkennungsverfahren behandelt werden. Je nach Einsatzbereich kann dabei eine unterschiedliche Unterteilung der gesamten Wortfolge in Abschnitte und die Anwendung der verschiedenen Erkennungsverfahren vorteilhaft sein. Unter Wörtern seien dabei hier und im folgenden nicht alleine Wörter im sprachlichen Sinne als Lautfolgen mit einem zuweisbaren Begriffsinhalt gemeint, sondern unter Wörtern seien vielmehr allgemein einheitlich
ren Begriffsinhalt gemeint, sondern unter Wörtern seien vielmehr allgemein einheitlich im Spracherkenner verarbeitete Lautfolgen gemeint, beispielsweise auch die Aussprache einzelner Buchstaben, Silben oder Silbenfolgen ohne bestimmte Begriffszuordnung.

Bei der Einteilung einer Wortfolge in zwei oder mehr Abschnitte kann insbesondere wenigstens ein Abschnitt in Position und/oder Länge fest vorgegeben sein. Ein solcher fest vorgegebener Abschnitt kann insbesondere am Anfang einer Wortfolge positioniert sein und dabei auch eine feste Länge in der Anzahl der von ihm umfaßten Wörter aufweisen. Vorteilhafterweise wird dann diesem Abschnitt das Erkennungsverfahren mit der integrierten eindeutigen Syntax zugewiesen. Durch die begrenzte Länge des Abschnitts bleibt der Aufwand bei der Vorgabe der Syntax und bei der Verarbeitung nach dem Erkennungsverfahren mit integrierter eindeutiger Syntax in akzeptablen Grenzen. Gleichzeitig kann die Menge der sinnvollen Wortfolgen durch die Syntaxvorgabe und deren Berücksichtigung in dem ersten Abschnitt erheblich eingeschränkt werden. Ein vorteilhaftes Anwendungsgebiet hierfür ist die Eingabe von Begriffen durch Buchstabieren. Beispielsweise kann die Erkennung von einigen zehntausend verschiedener Städtenamen bei buchstabierender Spracheingabe durch die Kombination eines anfänglichen Abschnitts fester Länge und dessen Verarbeitung nach einem Erkennungsverfahren mit integrierter eindeutiger Syntax und die Weiterverarbeitung der auf diesen Abschnitt folgenden Spracheingabe nach einem statistischen N-gram Erkennungsverfahren, insbesondere einem Bigram- oder. Trigram-Erkennungsverfahren mit überraschend hoher Erkennungsrate und geringem Aufwand durchgeführt werden. Bei alleiniger Anwendung eines Erkennungsverfahrens mit integrierter eindeutiger Syntax würde der Aufwand für die Syntaxintegration und Verarbeitung den vertretbaren Rahmen sprengen. Andererseits zeigt eine reine Anwendung eines statistischen Sprachmodells in solchen Fällen eine nur unzureichende Erkennungsrate.

Andere Anwendungsbeispiele für den vorteilhaften Einsatz eines abschnittsweise eingesetzten Erkennungsverfahren mit integrierter eindeutiger Syntax sind Wortfolgen mit Datums- oder Zeitangaben, deren Wortumfeld dann vorteilhafterweise mit einem statistischen Sprachmodell verarbeitet wird.

Besonders vorteilhaft ist die Kombination eines statistischen Sprachmodells mit einem Sprachmodell mit integrierter Syntax-Einschränkung auch bei der Erkennung von Wortfolgen, in welchen mit wiederkehrenden charakteristischen Begriffen oder Phrasen gerechnet werden kann. Hierbei wird vorzugsweise das statistische Erkennungsverfahren als Standard-Vorgehensweise eingesetzt und durch an sich bekanntes Überwachen des Wortflusses auf bestimmte Begriffe oder Phrasen (Word-Spotting oder Phrase-Spotting) kann bei Detektion solcher Begriffe oder Phrasen ein Abschnitt eingeleitet werden, in welchem die Spracherkennung nach dem Erkennungsverfahren mit integrierter eindeutiger Syntax erfolgt. Dieser Abschnitt kann eine feste oder variable, insbesondere auch eine an den jeweiligen Begriff oder die jeweilige Phrase angepaßte Länge besitzen. Nach Ende dieses Abschnitts kann, sofern die Wortfolge sich fortsetzt, wieder zu dem Standard-Erkennungsverfahren mit statistischer Wortfolgen-Bewertung zurückgewechselt werden.

Für das Erkennungsverfahren mit integrierter eindeutiger Syntax wird vorzugsweise das aus dem eingangs genannten Stand der Technik bekannte syntaktische Bigram-Erkennungsverfahren eingesetzt. Für das statistische Spracherkennungsverfahren mit Wortfolgen-Bewertung ist zur Anwendung eines einheitlichen Spracherkenners dann gleichfalls ein Bigram-Erkennungsverfahren vorteilhaft. Andererseits zeigt ein statistisches Erkennungsverfahren mit höherem N eine verbesserte Erkennungsrate, erfordert aber auch einen höheren Verarbeitungsaufwand. Ein vorteilhafter Kompromiß ist die Anwendung eines Trigram-Erkennungsverfahrens für das statistische Erkennungsverfahren, wobei eine bevorzugte Ausführungsform der Erfindung vorsieht, die Erkennung mit der Informationsfülle eines Trigram-Erkennungsverfahrens in Form einer Bigram-Verarbeitung durchzuführen.

Die Erfindung ist nachfolgend anhand von bevorzugten Ausführungsbeispielen unter Bezugnahme auf die Abbildungen noch eingehend veranschaulicht. Dabei zeigt:
- Fig. 1: das einfache Ablaufschema der Verarbeitung für das Beispiel einer buchstabierenden Spracheingabe
- Fig. 2: einen Netzwerkgraphen nach dem Stand der Technik
- Fig. 3: den Graphen nach Fig. 2 mit zusätzlicher Syntax-Einschränkung
- Fig. 4: den Anfang des Graphen nach Fig. 3 und Anwendung der Erfindung
- Fig. 5: ein erweitertes Beispiel nach dem Prinzip der Fig. 4

Als Beispiel zur Erläuterung der Erfindung anhand der Figuren sei die buchstabierende Spracheingabe von Städtenamen gewählt. Das Lexikon eines hierfür einzusetztenden Buchstabiererkenners umfaßt ca. 30 Buchstaben sowie einige Zusatzworte wie Doppel oder Bindestrich. Die Liste der Städtenamen enthalte beispielsweise einige zehntausend Einträge, so daß eine vollständige Speicherung der eindeutigen syntaktischen Information (in diesem Falle der Buchstabenfolgen) den Umfang des die syntaktische Information enthaltenden Lexikons sowie den Rechenzeitbedarf bei der Erkennung in inakzeptable Höhen treiben würde.

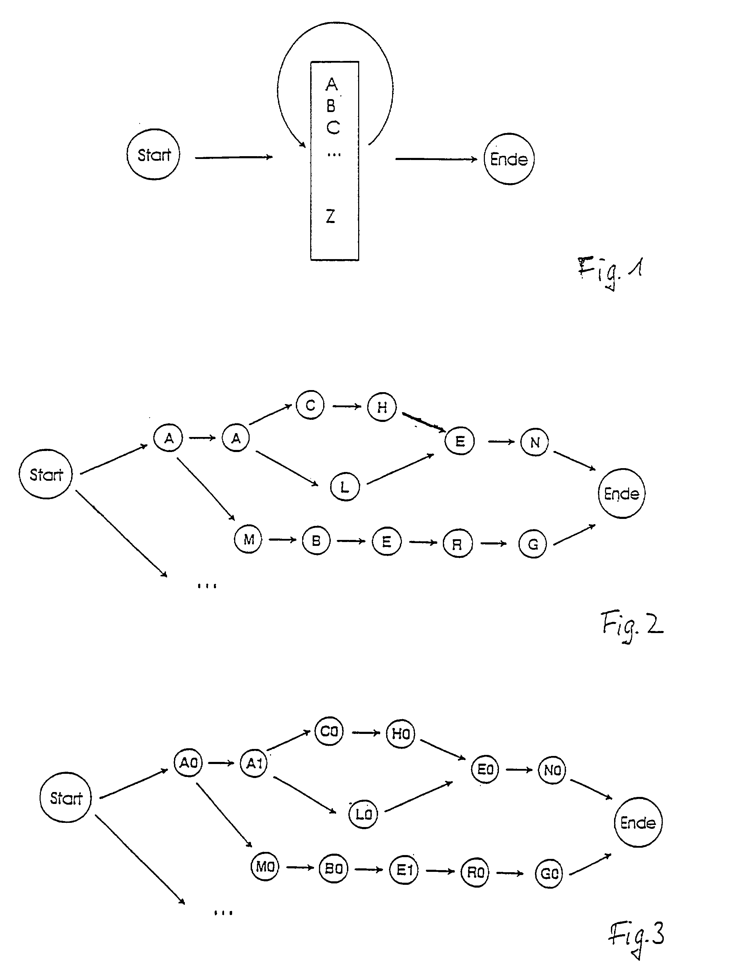

Das in Fig. 1 skizzierte Ablaufschema bei der Erkennung einer buchstabierenden Eingabe ohne irgendwelche Vorgaben gibt durch die eingezeichneten Pfeile an, daß ausgehend von einem Startknoten, die Wortfolge (in dem gewählten Beispielsfall eine Folge einzeln ausgesprochener Buchstabennamen) mit einem beliebigen der vorgesehen Buchstaben beginnen kann und auf jeden Buchstaben ein beliebiger anderer Buchstabe folgen kann, sofern nicht bereits die Wortfolge endet, was durch den Endeknoten repräsentiert ist.

In der gebräuchlichen Netzwerk-Graphen-Darstellung sind beispielsweise Netzwerkpfade für die Städtenamen Aachen, Aalen und Amberg eingetragen. Wie in der eingangs zum Stand der Technik bereits genannten DE 195 01 599 C1 dargelegt wird, ergeben sich bei einem solchen Netzwerk-Graphen durch die an verschiedenen Positionen des Netzwerks auftretenden gleichen Wortknoten (Buchstaben) neben den durch die Netzwerkpfade vorgesehenen sinnvollen Wortfolgen auch eine Vielzahl von unsinnigen Wortfolgen, die aber nach dem Sprachmodell als zulässig gelten.

In der DE 195 01 599 C1 wird zur Behebung dieses Problems vorgeschlagen, diejenigen Wortknoten, die in dem Netzwerk mehrfach auftreten, durch Indizierung zu unterscheiden. Durch die Indizierung werden alle Wortknoten des Netzwerkes eindeutig und zu jedem Wortknoten können als die Gesamtheit aller zulässigen Wortfolgen beschreibende Syntax vollständig die zulässigen nachfolgenden Wortknoten angegeben werden. Insbesondere bei der buchstabierenden Eingabe von Begriffen aus einer großen Liste von Begriffen ist die Vieldeutigkeit des Netzwerk-Graphen ohne Indizierung enorm hoch.

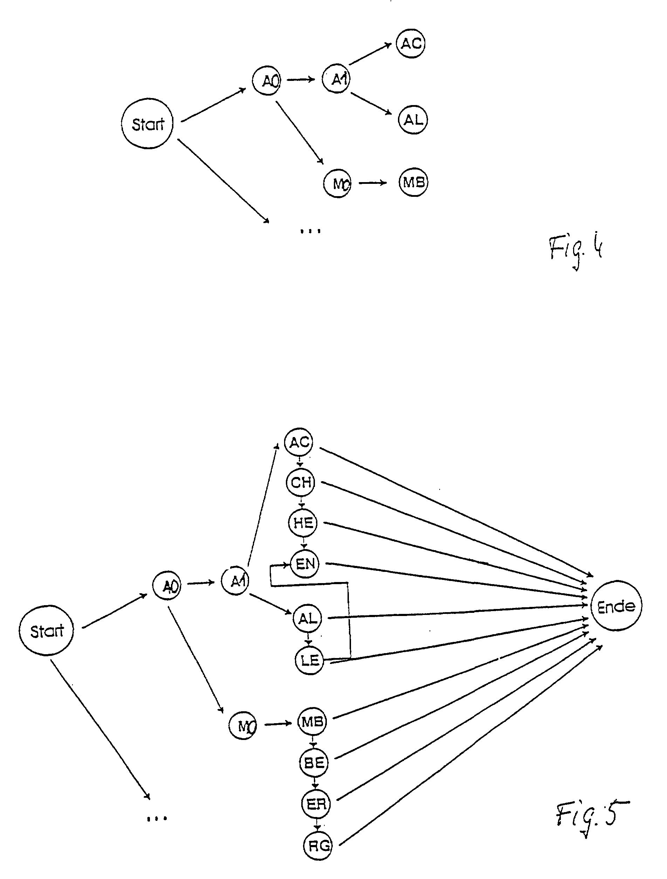

In Fig. 4 wird unter Zugrundelegen des Beispiels der Fig. 3 das Vorgehen nach der Erfindung dargestellt. Gewählt ist der Anschaulichkeit halber eine Variante der Erfindung, bei welcher am Anfang der Wortfolge ein Abschnitt konstanter vorgegebener Länge nach einem Erkennungsverfahren mit eindeutiger Syntax-Integration verarbeitet wird und danach auf ein statistisches Erkennungsverfahren mit Wortfolgen-Bewertung gewechselt wird. Als Erkennungsverfahren mit eindeutiger syntaktischer Einschränkung wird ein syntaktisches Bigram-Erkennungsverfahren zugrundegelegt. Die Länge des einleitenden Abschnitts am Beginn der Wortfolge sei zu k=3 Worten angenommen. Für den nachfolgenden, in der Länge a priori nicht bekannten oder beschränkten Abschnitt der Wortfolge sei der Einsatz eines statistischen Erkennungsverfahrens mit Wortfolgen-Bewertung mit der Informationstiefe eines Trigram-Verfahrens angenommen. Weiter sei zur Veranschaulichung einer besonders bevorzugten Ausführungsform der Erfindung die Verarbeitung der Trigram-Information nach Art eines Bigram-Erkennungsverfahrens beschrieben, indem die innerhalb des Trigram-Fensters vorhandene Informationsmenge von 3 Worten (Worttripel) aufgeteilt wird in zwei (Worttupel) überlappende Pseudoworte, die jeweils aus einer Kombination zweier aufeinanderfolgender Worte des zugrundegelegten Trigram-Fensters bestehen.

Bei den in Fig. 4 skizzierten Beispiel wird ausgehend von dem Startknoten zu Beginn einer Wortfolge in an sich aus dem Stand der Technik bekannter Weise ein syntaktisches Bigram-Erkennungsverfahren angewandt. Für die in Fig. 2 und Fig. 3 als Netzwerkpfade eingetragenen Städtenamen
AACHEN
AALEN
AMBERG
bedeutet dies, daß die ersten drei einzeln gesprochenen Buchstaben
AAC
AAL
AMB
nach dem syntaktischen Bigram-Erkennungsverfahren verarbeitet werden. Für die Verarbeitung des nachfolgenden Wortfolgenabschnitts nach einem Trigram-Erkennungsverfahren ist es vorteilhaft, wenn die Information aus dem ersten Abschnitt bereits als Historie für den Beginn des zweiten Abschnitts mit ausgewertet werden kann. Für die Verarbeitung mit der Informationstiefe eines Trigrams bedeutet dies, daß die Buchstabenfolgen
ACHEN
ALEN
MBERG
der Information mit Trigram-Informationsumfang vorteilhafterweise zur Verfügung stehen sollten. Die Verarbeitung in dem zweiten Abschnitt der buchstabierend eingegebenen Wortfolge schließt daher vorteilhafterweise die letzten beiden Buchstaben des ersten Abschnitts mit ein.

Besonders vorteilhaft ist es, wenn in allen aufeinanderfolgenden Abschnitten derselbe Spracherkenner eingesetzt werden kann. Hierzu wird nun in dem zweiten Abschnitt die mit Trigram-Informationstiefe vorliegende Information nach Art eines Bigram-Erkennungsverfahrens verarbeitet. Hierzu wird das Worttripel des schrittweise gleitend über die Wortfolge verschobenen Trigram-Fensters zu einem Pseudowort-Tupel umgeformt, in dem jeweils zwei benachbarte Worte des Worttripels des Trigram-Fensters zu einem Pseudowort zusammengefaßt werden. Für die gewählten Beispiele ergibt sich damit eine Folge von Pseudoworten der Art
AC CH HE EN
AL LE EN
MB BE ER RG
wobei jeweils zwei aufeinanderfolgende Pseudoworte (Buchstabenpaar) die Sprachinformation eines Worttripels aus einem Trigram-Fenster enthalten. Durch die Umformung der Worttripel zu Pseudowort-Tupeln wird eine Bigram-Verarbeitung, welche jeweils lediglich zwei aufeinanderfolgende Pseudoworte berücksichtigt, unter Erhalt der Trigram-Informationstiefe möglich. Durch die Bigram-Verarbeitung auch im zweiten Abschnitt bleibt der Aufbau des Spracherkenners über die gesamte Wortfolge gleich.

Für den Übergang von dem ersten Abschnitt mit Verarbeitung nach einem syntaktischen Bigram-Erkennungsverfahrens zu dem zweiten Abschnitt mit Verarbeitung nach dem Pseudowort-Bigram-Erkennungsverfahren ohne syntaktische Einschränkung wird vorteilhafterweise im ersten Abschnitt eine Ergänzung des letzten Wortknotens um die Information des vorangegangenen Wortknotens vorgenommen, so daß sich in dem ersten Abschnitt nun eine Folge von Wortknoten (Buchstaben) der Art
A A AC
A A AL
A M MB
ergibt, wobei der letzte Wortknoten wieder ein Pseudowort mit der Information des vorangegangenen Knotens darstellt.

In Fig. 5 ist ein nach diesem Prinzip aufgebauter Ausschnitt des Netzwerk-Graphen für die auch in Fig. 2 und Fig. 3 gewählten Beispiele dargestellt. Ausgehend von einem Startknoten wird das Netzwerk im ersten Abschnitt durch Einzelwort-Knoten (Einzelbuchstaben) aufgebaut, welche dann am Übergang zu dem zweiten Abschnitt in Pseudowort-Knoten mit jeweils dem Informationsumfang von zwei aufeinanderfolgenden Buchstaben übergehen. Die Übergänge zwischen den Pseudowort-Knoten werden in an sich bekannter Weise anhand von Lernstichproben bewertet. Der so entstehende Netzwerk-Graph umfaßt die Kombination der beiden verschiedenen Erkennungsverfahren. Trotz der wesentlich höheren Anzahl der unterscheidbaren Pseudoworte gegenüber der Anzahl der verschiedenen Buchstaben ergibt der Verzicht auf die durchgehende Anwendung einer syntaktischen Einschränkung über das gesamte Netzwerk eine erhebliche Reduzierung des Verarbeitungsaufwands, bei hoher Erkennungsrate.

Bei dem Beispiel der Fig. 5 ist durch Pfeile von jedem der Pseudowort-Knoten zu dem Endeknoten berücksichtigt, daß die Spracheingabe auch bereits nach nur einem Teil der vollständigen Wortfolge bereits für die Zuweisung eines Begriffs aus der vorgegebenen Liste ausreichen kann. In einem Erkenner kann dies in der Form implementiert sein, daß der Erkenner bei ausreichender Einschränkung der Anzahl der nach Eingabe eines Teils der Wortfolge als zutreffend in Frage kommenden Begriffe beispielsweise auf einer Anzeige eine Auswahl von Begriffen anbietet und die Eingabe damit verkürzt werden kann.

Die Erfindung ist nicht auf die beschriebenen Ausführungsbeispiele beschränkt, sondern im Rahmen fachmännischen Könnens auf verschiedene Weise abwandelbar. Insbesondere ist der Umfang der Berücksichtigung von syntaktischer Information bei dem zweiten Verfahren variabel.

## Patentansprüche

1. Verfahren zur Spracherkennung von aus mehreren Wörtern eines gegebenen Wortschatzes zusammengesetzten Wortfolgen, bei welchem ein erstes Erkennungsverfahren und ein zweites Erkennungsverfahren vorgesehen sind,
wobei das erste Erkennungsverfahren und das zweite Erkennungsverfahren auf getrennte Abschnitte einer zu erkennenden Wortfolge angewendet werden, **dadurch gekennzeichnet,**
- **daß** als erstes Verfahren ein Bigram-Erkennungsverfahren mit integrierter eindeutiger Syntax angewendet wird,
- **daß** als zweite Erkennungsverfahren ein Erkennungsverfahren mit statistischer Wortfolgen-Bewertung angewendet wird, und
- **daß** bei einem Wechsel von dem Bigram-Erkennungsverfahren mit integrierter eindeutiger Syntax zu dem zweiten Erkennungsverfahren mit statistischer Wortfolgen-Bewertung die letzten beiden Wörter des nach dem ersten Verfahren bearbeiteten Abschnitts zu einem Pseudowort zusammengefaßt werden, die mit einem Bigram-Erkennungsverfahren bearbeitet werden.

2. Verfahren nach Anspruch 1, **dadurch gekennzeichnet, daß** zumindest ein Abschnitt in seiner Position und/oder seiner Länge vorgegeben und fest einem der alternativen Erkennungsverfahren zugewiesen wird.

3. Verfahren nach Anspruch 2, **dadurch gekennzeichnet, daß** ein Abschnitt vorgegebener Länge am Satzanfang nach dem ersten Erkennungsverfahren mit integrierter Syntax verarbeitet wird.

4. Verfahren nach Anspruch 1, **dadurch gekennzeichnet, daß** das zweite Verfahren ein Trigram-Erkennungsverfahren ist, bei welchem die zulässigen Wortfolgen über eine rein statistische Bewertung eingeschränkt werden.

5. Verfahren nach Anspruch 4, **dadurch gekennzeichnet, daß** ein Worttripel eines Trigram-Fensters als Pseudowort-Tupel dargestellt wird, wobei die beiden Pseudowörter eines Tupels überlappen und jeweils zwei Wörter des entsprechenden Tripels enthalten.

6. Verfahren nach einem der Ansprüche 1 bis 5, **dadurch gekennzeichnet, daß** als Standard das zweite Erkennungsverfahren ohne integrierte Syntax angewandt wird und ein Wechsel zu dem ersten Erkennungsverfahren mit integrierter Syntax aufgrund einer Wort- oder Phrasendetektion (Word-Spotting oder Phrase-Spotting) vorgenommen wird.

## Claims

1. Method for speech recognition of word sequences composed of a plurality of words from a given vocabulary, in the case of which a first recognition method and a second recognition method are provided, the first recognition method and the second recognition method being applied to separate sections of a word sequence to be recognized, **characterized**
- **in that** a bigram recognition method with integrated unique syntax is applied as the first method,
- **in that** a recognition method with statistical word sequence evaluation is applied as the second recognition method, and
- **in that**, in the event of a change from the bigram recognition method with integrated unique syntax to the second recognition method with statistical word sequence evaluation, the last two words of the section processed using the first method are combined to form a psuedoword which is processed with the aid of a bigram recognition method.

2. Method according to Claim 1, **characterized in that** at least one section is prescribed as to its position and/or its length and allocated permanently to one of the alternative recognition methods.

3. Method according to Claim 2, **characterized in that** a section of prescribed length at the start of a sentence is processed using the first recognition method with integrated syntax.

4. Method according to Claim 1, **characterized in that** the second method is a trigram recognition method in which the permissible word sequences are limited via a purely statistical evaluation.

5. Method according to Claim 4, **characterized in that** a word triple of a trigram window is represented as a pseudoword tuple, the two pseudowords of a tuple overlapping and respectively containing two words of the corresponding triple.

6. Method according to one of Claims 1 to 5, **characterized in that** the second recognition method without integrated syntax is applied as standard, and a change to the first recognition method with integrated syntax is undertaken on the basis of a detection of a word or phrase (word-spotting or phrase-spotting).

## Revendications

1. Procédé de reconnaissance vocale de suites de mots composés de plusieurs mots d'un vocabulaire donné, avec lequel sont prévus un premier procédé de reconnaissance et un deuxième procédé de reconnaissance, le premier procédé de reconnaissance et le deuxième procédé de reconnaissance étant ici appliqués sur des sections séparées d'une suite de mots à reconnaître, **caractérisé en ce**
- **que** le premier procédé employé est un procédé de reconnaissance bigramme avec une syntaxe explicite intégrée,
- **que** le deuxième procédé de reconnaissance employé est un procédé de reconnaissance avec évaluation statistique des suites de mots, et
- **qu'**en lors du passage du procédé de reconnaissance bigramme avec syntaxe explicite intégrée au deuxième procédé de reconnaissance avec évaluation statistique de la suite de mots, les deux derniers mots de la section traitée selon le premier procédé sont regroupés en un pseudo-mot qui est traité avec un procédé de reconnaissance bigramme.

2. Procédé selon la revendication 1, **caractérisé en ce qu'**au moins une section présente une position et/ou une longueur prédéfinie et qu'elle est affectée de manière fixe à l'une des variantes de procédé de reconnaissance.

3. Procédé selon la revendication 2, **caractérisé en ce qu'**une section de longueur prédéfinie en début de phrase est traitée selon le premier procédé de reconnaissance avec syntaxe intégrée.

4. Procédé selon la revendication 1, **caractérisé en ce que** le deuxième procédé est un procédé de reconnaissance trigramme avec lequel les suites de mot admises sont limitées par une évaluation statistique pure.

5. Procédé selon la revendication 4, **caractérisé en ce qu'**un mot triple d'une fenêtre du trigramme est représenté sous la forme d'un pseudo-mot double, les deux pseudo-mots d'un double se superposant et contenant chacun deux mots du triple correspondant.

6. Procédé selon l'une des revendications 1 à 5, **caractérisé en ce que** le deuxième procédé de reconnaissance sans syntaxe intégrée est utilisé par défaut et qu'un passage au premier procédé de reconnaissance avec syntaxe intégrée est effectué en fonction de la détection d'un mot ou d'une phrase (repérage de mot ou repérage de phrase).
